# EUROPEAN PATENT APPLICATION

(11) **EP 4 420 528 A1**
(43) Date of publication of application: **28.08.2024**
(21) Application number: 22883924.7
(22) Date of filing: 17.10.2022
(51) Int. Cl.: A23L 33/135, A23L 33/185, A23J 3/14, A23L 11/00, A23L 29/262, A23L 33/15, A23L 33/17, A23L 33/16, A23P 30/00

(54) **METHOD OF PREPARING FERMENTED TEXTURIZED VEGETABLE PROTEIN HAVING ENHANCED BINDING STRENGTH**

(30) Priority: 18.10.2021 KR 20210138162
(71) Applicant: CJ CheilJedang Corporation, Seoul 04560 (KR)
(72) Inventor: KIM, Mi Jung, Seoul 04560 (KR); LEE, Ja Young, Seoul 04560 (KR); GWON, Song Hui, Seoul 04560 (KR); YANG, Si Chang, Seoul 04560 (KR); KIM, Tae Yeon, Seoul 04560 (KR); YOON, Hyo Jung, Seoul 04560 (KR); JEON, Eun Jung, Seoul 04560 (KR); OH, Ji Young, Seoul 04560 (KR)
(74) Representative: Handley, Matthew Edward
(86) International application number: PCT/KR2022/015728
(87) International publication number: WO 2023/068701

(57) **Abstract**

The present application relates to a method of preparing a fermented texturized vegetable protein having enhanced binding strength. According to the present application, the binding strength of a texturized vegetable protein with the mycelium of fungi formed between texturized vegetable protein (TVP) particles is improved by a compression process. In one embodiment, the texturized vegetable protein which is similar to meat tissue and has a soft texture can be prepared.

## Description

### [Technical Field]

The present application relates to a method of preparing a fermented texturized vegetable protein having enhanced binding strength.

### [Background Art]

Plant-based meat is a food manufactured to taste like meat using plant-based ingredients rather than animal-based ingredients such as meat, and is also called plant-based meat substitute. Plant-based meat includes wheat meat made using gluten, a protein contained in wheat flour, rice meat made using rice, and soy meat made by mixing soy protein and gluten.

To make soy protein have meat texture, spinning process, thermoplastic extrusion, steam texturization, etc. have been used. In thermoplastic extrusion and steam texturization, a true fibrous structure is not formed, but soy proteins are hydrated and form layers to produce a chewy material.

Texturized Vegetable Protein (TVP) is manufactured through thermoplastic extrusion using soy protein as the main ingredient. When defatted soy flour or concentrated soy protein is mixed well with water and then heated in an extruder and extruded under high pressure, the soy protein molecules coagulate with directionality, giving the tissue a chewing sensation similar to meat. The texture and taste of the final texturized vegetable protein product are greatly affected by the type and ratio of mixed ingredients, moisture content of mixed ingredients, heating temperature, and heating time. Texturized vegetable protein (TVP), which is currently used commercially, is a low-moisture TVP in the form of a pellet. It is manufactured into a lump form by adding a binder after hydration and is used in food.

When texturized vegetable protein (TVP) is used as a raw material for plant-based meat, it must have the same texture, flavor, and appearance as meat, and the texture must not be destroyed by rehydration, which is essential during cooking. It must also have functionality such as water retention capacity and fat adsorption similar to meat. The conditions that these plant-based meat products must meet are possible with current food processing technology, but need to be further improved.

Bean-curd dregs have low utility as food, so most are used as feed or discarded as industrial waste. Utilizing bean-curd dregs as food has been considered an important task to be solved in the related industry because it can reduce product costs and increase resource utilization.

Korean Patent Publication No. 10-2020-0141958 discloses an artificial meat food composition containing soy protein, gluten, starch, protein cross-linker, and protein hydrolyzate, and artificial meat manufactured using this composition, and explains that the artificial meat manufactured in this way reproduces the appearance, texture, juiciness, and umami of animal meat.

### [Prior Art Documents]

### [Patent Document]

Korean Laid-open Patent Publication No.10-2020-0141958

### [Disclosure]

### [Technical Problem]

The present inventors made efforts to develop a process to strengthen the binding strength between texturized vegetable protein (TVP) particles in the texturized vegetable protein. As a result, it was experimentally confirmed that the above purpose could be achieved by inoculating fungi directly on texturized vegetable protein (TVP), culturing it to form mycelium, and then pressing it, thereby completing the present invention.

Therefore, one object of the present application is to provide a method for preparing fermented texturized vegetable protein (TVP) with enhanced binding strength and improved texture.

### [Technical Solution]

In order to achieve the above objects,

One aspect of the present application provides a method of preparing a fermented texturized vegetable protein comprising the following steps of:
(a) inoculating and culturing fungi on a substrate containing the texturized vegetable protein (TVP); and
(b) compressing the substrate culture.

The present application is described in more detail below.

### Step (a) : Inoculating and culturing fungi on a substrate containing texturized vegetable protein (TVP)

In the present application, fungi are inoculated and cultured on a substrate containing a texturized vegetable protein (TVP).

The term "texturized vegetable protein (TVP)" used herein refers to a structured vegetable protein manufactured through thermoplastic extrusion using soy protein as the main raw material. The texturized vegetable protein (TVP) can be manufactured by mixing defatted soy flour or concentrated soy protein with water and then extruding it at high pressure while heating it in an extruder. The texturized vegetable protein (TVP) of the present application has the same meaning as texturized soy protein (TSP), soy meat, and soy protein in a broad sense.

The raw material of the texturized vegetable protein of the present application may be a protein derived from wheat, soybeans, peas, sesame seeds, cotton seeds, or rice, and specifically may be a protein derived from soybeans or wheat.

The texturized vegetable protein may have various sizes and shapes depending on the shape of the extruder's injection port and the temperature and pressure conditions during extrusion. For example, the texturized vegetable protein may be in the form of chunks, flakes, granules, minced, slices, or strips, and the size of the texturized vegetable protein may be 5 to 60 mm in length and 1 to 20 mm in thickness.

In one embodiment, the substrate for inoculating fungi may further include one or more ingredients selected from the group consisting of bean-curd dregs, soy powder, wheat flour, dietary fiber, protein, amino acids, carbohydrates, fat, oil, vitamins and minerals in addition to the texturized vegetable proteins.

In the present application, the term "bean-curd dregs" refers to the sediment remaining after squeezing out soybean water to make tofu or soy milk. The bean-curd dregs have a higher content of carbohydrates and fat than soy protein or wheat protein, which are the main ingredients of texturized vegetable protein (TVP), and when included in the substrate, they can be used as nutrients for fungi and improve their growth.

In the present application, when soy powder or wheat flour is also included in the substrate, it can be used as a nutritional ingredient for fungi to improve their growth.

In one embodiment, the substrate containing texturized vegetable proteins may further contain bean-curd dregs.

The bean-curd dregs may be dried bean-curd dregs.

The bean-curd dregs or dried bean-curd dregs may be contained in an amount greater than 0 wt% and 60wt% or less compared to the total weight of the substrate.

Specifically, the content of the bean-curd dregs or dried bean-curd dregs may have any one lower limit value selected from the group consisting of 0 wt%, 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, and 20 wt%; and any one upper limit value selected from the group consisting of 60 wt%, 57 wt%, 55 wt%, 53 wt%, 50 wt%, 47 wt%, 45 wt%, 43 wt%, 40wt%, 39 wt%, 38 wt%, 37 wt%, 36 wt%, 35 wt%, 34 wt%, 33 wt%, 32 wt%, 31 wt%, and 30wt%, based on the total weight of the substrate. More specifically, it may be greater than 0 wt% and 60wt% or less; 1 wt% to 60wt%, 2 wt% to 60wt%, 3 wt% to 60wt%, 4 wt% to 60wt%, 5 wt% to 60wt%, 6 wt% to 60wt%, 7 wt% to 60wt%, 8 wt% to 60wt%, 9 wt% to 60wt%, 10 wt% to 60wt%; 1 wt% to 55wt%, 2 wt% to 55wt%, 3 wt% to 55wt%, 4 wt% to 55wt%, 5 wt% to 55wt%, 6 wt% to 55wt%, 7 wt% to 55wt%, 8 wt% to 55wt%, 9 wt% to 55wt%, 10 wt% to 55wt%; 1 wt% to 45wt%, 2 wt% to 45wt%, 3 wt% to 45wt%, 4 wt% to 45wt%, 5 wt% to 45wt%, 6 wt% to 45wt%, 7 wt% to 45wt%, 8 wt% to 45wt%, 9 wt% to 45wt%, 10 wt% to 45wt%; 1 wt% to 40wt%, 2 wt% to 40wt%, 3 wt% to 40wt%, 4 wt% to 40wt%, 5 wt% to 40wt%, 6 wt% to 40wt%, 7 wt% to 40wt%, 8 wt% to 40wt%, 9 wt% to 40wt%, 10 wt% to 40wt%; 1 wt% to 38wt%, 1 wt% to 35wt%, 1 wt% to 34wt%, 1 wt% to 32wt%, 1 wt% to 30wt%; 3 wt% to 38wt%, 3 wt% to 35wt%, 3 wt% to 34wt%, 3 wt% to 32wt%, 3 wt% to 30wt%; 5 wt% to 38wt%, 5 wt% to 35wt%, 5 wt% to 34wt%, 5 wt% to 32wt%, 5 wt% to 30wt%; 7 wt% to 38wt%, 7 wt% to 35wt%, 7 wt% to 34wt%, 7 wt% to 32wt%, 7 wt% to 30wt%; 10 wt% to 38wt%, 10 wt% to 35wt%, 10 wt% to 34wt%, 10 wt% to 32wt%, or 10 wt% to 30wt%.

In the present application, when the bean-curd dregs or dried bean-curd dregs are included in the texturized vegetable protein at the above content, the binding strength of texturized vegetable protein can be further increased after fungi culture compared to the case where bean-curd dregs are not added.

In one embodiment, the protein content of the substrate may be 50% to 70% of the total substrate based on solid content. In one embodiment, the substrate may include texturized vegetable protein and bean-curd dregs.

Specifically, the protein content of the substrate may have any one lower limit value selected from the group consisting of 50%, 51%, 52%, 53%, 54%, 55%, 56%, and 57%; and any one upper limit value selected from the group consisting of 70%, 69%, 68%, 67%, 66%, 65%, 64%, and 63%, based on the solid content. For example, the protein content of the substrate may be 50% to 70%, 51% to 70%, 52% to 70%, 53% to 70%, 54% to 70%, 55% to 70%, 50% to 69%, 50% to 68%, 50% to 67%, 50% to 66%, 52% to 69%, 52% to 68%, 52% to 67%, 52% to 66%, 54% to 69%, 54% to 68%, 54% to 67%, 54% to 66%, or 55% to 65%, based on the solid content.

In one embodiment, the acidity of the substrate may be 0.1% to 0.4%, 0.11% to 0.4%, 0.12% to 0.4%, 0.13% to 0.4%, 0.14% to 0.4%, 0.15% to 0.4%, 0.16% to 0.4%, 0.17% to 0.4%, 0.18% to 0.4%, 0.19% to 0.4%, 0.2% to 0.4%, 0.22% to 0.4%, 0.24% to 0.4%, 0.26% to 0.4%, 0.28% to 0.4%, or 0.3% to 0.4%. The acidity refers to the sum of the contents of acidic substances or components contained in the substrate. By adjusting the acidity of the substrate, contamination by external microorganisms that may occur during fermentation can be prevented.

The acidity of the substrate can be adjusted by adding an acidic substance, for example, organic acid such as lactic acid, citric acid, acetic acid, or malic acid, and specifically, it can be adjusted by adding fermented vinegar containing an organic acid to the substrate.

The fungi used for culture by inoculating thereof on the substrate may be edible and capable of forming mycelium.

In one embodiment, the fungi may be one or more fungi selected from the group consisting of *Rhizopus* genus, *Mucor* genus, *Neurospora* genus, *Amylomyces* genus, *Aspergillus* genus, and *Monascus* genus.

In another embodiment, the fungi of *Rhizopus* genus may be fungi of *Rhizopus oligosporus.*

In one embodiment, the fungi can be used by directly inoculating thereof on a substrate containing texturized vegetable protein, or a substrate containing texturized vegetable protein and bean-curd dregs.

Alternatively, the fungi can first be inoculated into bean-curd dregs and the cultured product can be used as an inoculum. This inoculum can also be used by inoculating thereof on a substrate containing texturized vegetable protein or a substrate containing texturized vegetable protein and bean-curd dregs.

In one embodiment, the substrate can be used after hydration.

Specifically, the hydration can be performed by adding water to the substrate and leaving it at room temperature for a certain period of time.

The substrate can be sterilized using a sterilization method well known in the art, for example, heat treatment at 121°C for 5 to 20 minutes, to block contaminants present on the substrate.

Acidity can be adjusted by adding the acidic substance described above to the sterilized substrate.

Fungi can be inoculated and cultured on the sterilized substrate.

In one embodiment, the amount of fungi inoculated into the substrate may be 0.5 × 10⁴ cfu/g to 0.5 × 10⁸ cfu/g, or 0.5 × 10⁵ cfu/g to 0.5 × 10⁷ cfu/g.

In the present application, appropriate conditions for culturing after inoculating fungi on a substrate can be selected depending on the type of fungi. For example, after inoculating fungi onto a substrate, the inoculated substrate can be cultured at a temperature of 25 to 35°C and humidity of 70% to 99% for a time ranging from 1 hour to 10 days.

In the present application, when fungi are inoculated and cultured on a substrate containing texturized vegetable protein, mycelium of fungi grows and attaches between the pores of the texturized vegetable protein, thereby improving the binding strength of the texturized vegetable protein.

In addition, when a substrate culture containing mycelium of fungi is subjected to a substrate compression process described later, the binding strength of the texturized vegetable protein is further improved, the texture is improved, and for example, a texture similar to meat tissue can be realized.

### Step (b): Compressing substrate culture

In the present application, the culture of the substrate cultured by inoculating fungi on the substrate is compressed.

By reducing the voids between texturized vegetable protein particles by the compression, the binding strength of the texturized vegetable protein can be increased and at the same time a new texture, for example, a texture similar to meat tissue, can be realized.

In one embodiment, the porosity of the substrate cultured with the fungi of the present application before compression may be 20 to 50%.

The term "porosity" refers to the ratio of the volume of the entire voids of the culture of the substrate on which the fungi were cultured to the total volume of the culture of the substrate on which the fungi were cultured.

In one embodiment, the volume of the void can be calculated by subtracting the total volume of the substrate pieces (granules) from the total volume of the substrate culture.

More specifically, when putting TVP, which is a substrate, into a culture (fermentation) vessel, voids are generated between TVP pieces (granules) piled up inside the vessel, and the volume of void in the TVP or TVP culture piled up inside the vessel can be obtained by subtracting the volume of the entire TVP pieces (granules) from the volume of the entire TVP piled up inside the vessel.

In one embodiment, the total volume of the substrate pieces (granules) may be the mass of the entire substrate divided by the density. If the substrate is a texturized vegetable protein, the density of the texturized vegetable protein may be around 1.028, and at this time, the texturized vegetable protein is hydrated to 65% moisture.

In another embodiment, the total volume of the culture of the substrate before the compressing process may be the volume of the fermentation vessel, and the total volume of the culture of the substrate after the compressing process may be a value multiplied by the length, width, and height of the compressed culture of the substrate.

In one embodiment, the porosity of the substrate with increased binding strength after compression can be 0 to 20%, specifically, 0 to 20%, 0 to 19%, 0 to 18%, 0 to 17%, 0 to 16%, 0 to 15%, 0 to 14%, 0 to 13, 0 to 12%, 0 to 11%, 0 to 10%, 1 to 20%, 1 to 19%, 1 to 18%, 1 to 17%, 1 to 16%, 1 to 15%, 1 to 14%, 1 to 13%, 1 to 12%, 1 to 11%, or 1 to 10%.

The porosity of the substrate after compression can be appropriately adjusted or changed depending on the texture within the above numerical range.

In one embodiment, the compression may be vacuum compression or mold compression.

The vacuum compression may be a method of removing the air inside the container after placing the fungi culture of the substrate inside the container and sealing it. The vacuum process may be performed by removing the internal air for 1 to 60 seconds so that the pressure inside the container becomes 0.1 Pa to 100 kPa.

The mold compression may be a method of placing the fungi culture of the substrate within a certain frame and pressing the frame. The degree of pressure during compression can be adjusted depending on the intensity of the desired physical property.

In the present application, the binding strength (g) of the fermented texturized vegetable protein after compression may be 100 to 300g, 110 to 300g, 120 to 300g, 110 to 270g, 110 to 250g, 110 to 240g, 120 to 270g, 120 to 250g, or 120 to 240g.

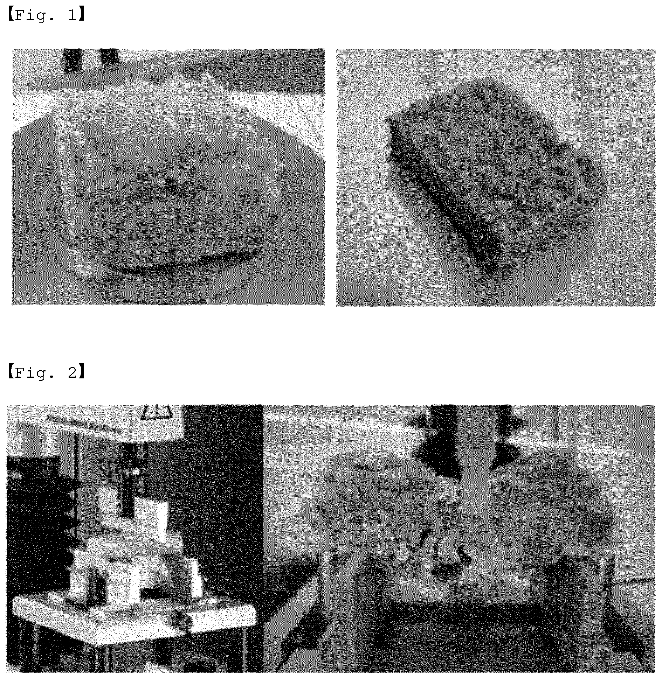

The binding strength can be defined as the force (g) required to deform the sample of the fermented texturized vegetable protein by placing it on a support and lowering the probe at the top, and can be defined as the binding strength of the first peak force (Break Strength) that occurs when the sample of the fermented texturized vegetable protein breaks (see Fig. 2).

Specifically, the binding strength may be a value measured by the Three-Point Bending Test using the Texture Analyzer described in Example 2 of the present specification under the conditions shown in Table 1. More specifically, the value may be measured using a Texture Analyzer (TA-XT plus, Stable Micro Systems, England) under the following measurement conditions and measurement methods(Test Mode: Compression, Pre-Test Speed: 1 mm/sec, Test Speed: 1 mm/sec, Post-Test Speed: 10 mm/sec, Target Mode: Distance, Distance: 30 mm, Trigger Type: Auto (Force), Trigger Force: 5 g).

In one embodiment, a binder may not be added during the manufacturing process of the fermented texturized vegetable protein of the present application.

Specifically, a binder may not be added to the substrate containing the texturized vegetable protein in step (a) or to the substrate culture in step (b). The fermented texturized vegetable protein produced in the present application may not contain a binder.

Binders not added in the present application include, for example, water-soluble proteins derived from eggs, milk, beans, etc.; starches such as potato starch, tapioca starch, sweet potato starch, arrowroot starch, wheat starch, corn starch, and rice starch; carboxymethylcellulose (CMC); gums such as carrageenan, guar gum, or xanthan gum, but is not limited thereto. More specifically, in the method of the present application, carboxymethylcellulose (CMC) may not be added as a binder.

The fermented texturized vegetable protein of the present application has high binding strength without the separate addition of the binder as described above, and has a new texture, for example, a soft texture similar to meat tissue.

In one embodiment, the method may further comprise a step of heating the compressed substrate culture after step (b).

The heating may be performed at a temperature of 75°C to 100°C for 1 minute to 10 minutes, specifically at a temperature of 76°C to 100°C, 77°C to 100°C, 78°C to 100°C, 79°C to 100°C, 80°C to 100°C, 81°C to 100°C, 82°C to 100°C, 83°C to 100°C, 84°C to 100°C, 85°C to 100°C, 86°C to 100°C, 87°C to 100°C, 88°C to 100°C, 89°C to 100°C, 90°C to 100°C, 91°C to 100°C, 92°C to 100°C, 93°C to 100°C, 94°C to 100°C, 95°C to 100°C, 96°C to 100°C, 97°C to 100°C, 98°C to 100°C, or 99°C to 100°C for 1 minutes to 10 minutes, 2 minutes to 10 minutes, 3 minutes to 10 minutes, 4 minutes to 10 minutes, 4 minutes to 9 minutes, 4 minutes to 8 minutes, 5 minutes to 8 minutes, or 5 minutes to 7 minutes.

Heating of the compressed substrate culture can be performed, for example, by immersing a container containing the compressed substrate culture in heated water. The heated water may be heated to a temperature of 75°C to 100°C, specifically 76°C to 100°C, 77°C to 100°C, 78°C to 100°C, 79°C to 100°C, 80°C to 100°C, 81°C to 100°C, 82°C to 100°C, 83°C to 100°C, 84°C to 100°C, 85°C to 100°C, 86°C to 100°C, 87°C to 100°C, 88°C to 100°C, 89°C to 100°C, 90°C to 100°C, 91°C to 100°C, 92°C to 100°C, 93°C to 100°C, 94°C to 100°C, 95°C to 100°C, 96°C to 100°C, 97°C to 100°C, 98°C to 100°C, or 99°C to 100°C. The immersion can be performed for 1 minute to 10 minutes, 2 minutes to 10 minutes, 3 minutes to 10 minutes, 4 minutes to 10 minutes, 4 minutes to 9 minutes, 4 minutes to 8 minutes, 5 minutes to 8 minutes, or 5 minutes to 7 minutes. Through the heating process, the binding strength of the texturized vegetable protein can be further increased, while a texture similar to meat tissue and a soft texture can be achieved.

In the present application, the binding strength (g) of the fermented texturized vegetable protein after compressing and heating may be 130 to 400g, 140 to 400g, 140 to 350g, 140 to 330g, 140 to 320g, 150 to 400g, 150 to 350g, 150 to 330g, 150 to 320g, or 150 to 310g.

The binding strength can be defined as the force (g) required to deform the sample of the fermented texturized vegetable protein by placing it on a support and lowering the probe at the top, and can be defined as the binding strength of the first peak force (Break Strength) that occurs when the sample of the fermented texturized vegetable protein breaks (see Fig. 2).

Specifically, the binding strength may be a value measured by the Three-Point Bending Test using the Texture Analyzer described in Example 2 of the present specification under the conditions shown in Table 1. More specifically, the value may be measured using a Texture Analyzer (TA-XT plus, Stable Micro Systems, England) under the following measurement conditions and measurement methods (Test Mode: Compression, Pre-Test Speed: 1 mm/sec, Test Speed: 1 mm/sec, Post-Test Speed: 10 mm/sec, Target Mode: Distance, Distance: 30 mm, Trigger Type: Auto (Force), Trigger Force: 5 g).

The fermented texturized vegetable protein with improved binding strength can be used not only as a meat substitute but also as a new protein material.

Another aspect of the present application provides a fermented texturized vegetable protein prepared by the method of preparing a fermented texturized vegetable protein described above.

The fermented texturized vegetable protein may include fungi mycelium.

In one embodiment, the binding strength (g) of the compressed fermented texturized vegetable protein may be 100 to 300g, 110 to 300g, 120 to 300g, 110 to 270g, 110 to 250g, 110 to 240g, 120 to 270g, 120 to 250g, or 120 to 240 g.

In one embodiment, the binding strength (g) of the fermented texturized vegetable protein after being pressed and heated may be 130 to 400g, 140 to 400g, 140 to 350g, 140 to 330g, 140 to 320g, 150 to 400g, 150 to 350g, 150 to 330g, 150 to 320g, or 150 to 310 g.

In one embodiment, the fermented texturized vegetable protein may not contain a binder.

Binders not included above may be water-soluble proteins derived from eggs, milk, beans, etc.; starches such as potato starch, tapioca starch, sweet potato starch, arrowroot starch, wheat starch, corn starch, and rice starch; carboxymethylcellulose (CMC); gums such as carrageenan, guar gum, or xanthan gum.

### [Advantageous Effects]

According to the method of the present application, fermented texturized vegetable protein with improved binding strength can be produced by the mycelium of fungi formed between texturized vegetable protein (TVP) particles and a compressing process. The fermented texturized vegetable protein produced by the method of the present application has further improved binding strength, for example, can achieve a soft texture similar to meat tissue, and maintains a texture similar to meat even after cooking. However, the effects of the present application are not limited to the effects mentioned above, and other effects not mentioned will be clearly understood by those skilled in the art from the following description.

### [Description of Drawings]

Fig. 1 is a photo of the fermented texturized vegetable protein (TVP) of the present application. The photo on the left is a photo of TVP after fermentation, and the photo on the right is a photo after vacuum pressing the fermented TVP.

Fig. 2 is a photo measuring the binding strength of the fermented texturized vegetable protein (TVP) of the present application. The photo on the left is a photo of the Three Point Bending Rig, and the photo on the right is a photo of the bending test of the sample.

### [Best Mode]

### [Mode for Carrying out the Invention]

Hereinafter, the present application will be described in detail through examples. However, the following examples specifically illustrate the present application, and the content of the present application is not limited by the following examples.

### Example

### Example 1: Preparation of fermented texturized vegetable protein (TVP)

### 1. Isolation of fungi

*Rhizopus oligosporus* strain was isolated from traditional Tempeh, the isolated strain was cultured on Potato Dextrose Agar (PDA) medium at 30°C for 4 days, and then the strain was preserved at 4°C. The preserved strain was used in the experiment.

### 2. Preparation of inoculum

As inoculum, a part of the preserved strain was isolated and used, and it was inoculated into sterilized tofu bean-curd dregs and cultured at 30°C for 4 days. The bean-curd dregs used for inoculation had a moisture content of 60% and were sterilized at 121°C for 15 minutes.

### 3. Main culture

Texturized vegetable protein (TVP) was purchased from Solbar (Solbar Ningbo Protein Technology Co., Ltd.) as Contex 31 TVP. The purchased texturized vegetable protein (TVP) was made of concentrated soy protein (soy protein concentrate) as the main ingredient and was of the flake type with a diameter of about 5 to 15 mm. Dried bean-curd dregs were prepared by drying the bean-curd dregs (CJ CheilJedang) generated during the tofu manufacturing process to a moisture content of 3 to 8%.

The texturized vegetable protein (TVP) prepared above was mixed with dried bean-curd dregs and used as a substrate. Dried bean-curd dregs were mixed with TVP at a ratio of 0 wt%, 20 wt%, and 40 wt% and homogenized, and then the protein content was adjusted to 50 to 70% based on solids to prepare a substrate. Next, 55 wt% of water was mixed with the substrate and left at room temperature for about 30 minutes to hydrate the substrate. The hydrated substrate was sterilized at 121°C for 15 minutes to block contaminants that could originate from the substrate. Fermented vinegar dilution was added to the sterilized substrate in an amount of 10 wt% to achieve a final acidity of 0.3 to 0.4% within the substrate.

After cooling the substrate prepared in this way to 30°C or lower, the prepared inoculum was inoculated onto the substrate so that the final inoculum number was 0.5 × 10⁶ cfu/g.

After inoculating the inoculum on the substrate, the substrate was homogenized, placed in a tray with an exhalation hole, sealed, and cultured for 24 hours at 30°C and 90% humidity. The cultured TVP was manufactured in the form of a lump in which the mycelium of fungi grew evenly between the TVP particles and the TVP particles were bound (see the left photo in Fig. 1). The final TVP fungi culture was stored frozen to stop the fermentation process, and after thawing, the binding strength was measured using the method in Example 2 below.

### 4. Processing after culture

The fermented TVP (Width x length x height: 160 x 120 x 30 mm), which had become lumpy after culturing, was vacuum compressed. Vacuum compression was performed by placing the fermented TVP inside a pouch, sealing it, and removing the air inside the pouch (see right photo in Fig. 1). Next, the vacuum-pressed fermented TVP was placed in a pouch and heated in boiling water (95 to 100°C) for 6 minutes. Each of the vacuum-pressed sample and the heat-treated sample after vacuum compression were stored frozen in the same manner as the fermented product, and after thawing, the binding strength was measured using the method in Example 2 below.

### Example 2: Measurement of binding strength of fermented texturized vegetable protein(TVP)

The binding strength between TVP containing mycelium formed by fungi culture was measured using a Texture Analyzer (TA-XT plus, Stable Micro Systems, England). TA analysis was performed using the Three-Point Bending Test under the conditions listed in Table 1 below. After fermentation by fungi culture, the sample size was set to 80 x 30 x 30 mm(width x length x height). The compressed sample had the characteristic of being a smaller size of the raw material, so it was set to 80 x 25 x 10 mm(width x length x height) to prevent the influence of size changes before and after compression. The sample was placed on a support, and the force (g) acting on the deformation of the sample was measured as the probe at the top descended (Fig. 2). At this time, the first maximum peak (First Peak Force, Break Strength) that occurs when the mycelium connecting TVP is broken was interpreted as the binding strength of the fermented TVP.

**[Table 1]**

| Item | Analysis condition |
|---|---|
| Test Mode | Compression |
| Pre-Test Speed | 1 mm/sec |
| Test Speed | 1 mm/sec |
| Post-Test Speed | 10 mm/sec |
| Target Mode | Distance |
| Distance | 30 mm |
| Trigger Type | Auto (Force) |
| Trigger Force | 5 g |

The measurement results are shown in Table 2 below. As a result of the measurement shown in Table 2, it was confirmed that in the fermented products of each combination of TVP (protein content 50 to 70%) with different bean-curd dregs content, the binding strength improved when pressed after fermentation or when both pressing and heat treatment were performed after fermentation, compared to the fermented product without compressing or heat treatment after fermentation. Samples before fermentation had no binding strength between TVPs, so analysis by Texture Analyzer was not possible.

**[Table 2]**

| TVP | | 100wt% | 80wt% | 60wt% |
|---|---|---|---|---|
| Bean-curd dregs | | 0wt% | 20wt% | 40wt% |
| Protein content (Based on solid content) | | 60% | | |
| Binding strength(g) | After fermentation | 95.8 | 126.0 | 229.6 |
| | After vacuum compression | 125.7 | 172.3 | 234.6 |
| | After vacuum compression and heating | 153.9 | 188.5 | 309.5 |

### Example 3: Cooking evaluation of fermented TVP

The prepared fermented TVP was pan-cooked and oven-cooked to evaluate binding retention and texture of TVP during the cooking process. The fermented TVP sample after fermentation, the sample in which the fermented TVP was vacuum-pressed, and the sample in which the fermented TVP was vacuum-pressed and heated were pan-cooked and oven-cooked, respectively, with oil applied in the same manner as a conventional cooking method. As a result, it was confirmed that the shape of each sample was maintained.

The oven-cooked samples were compared to animal meat products (beef hamburger patties) and were scored as 10 if the similarity in strength and chewiness was high, and 0 if the similarity was low, as shown in Table 3. As a result, it was confirmed that the meat-like texture was improved by compressing and heat treatment after compressing. While meat products were hard and had a strong chewy texture, fermented TVP had a relatively soft texture. As the pressing and heating process was added, the hardness and chewiness increased and the meat likeness improved. In addition, as the bean-curd dregs content increased, the soft texture increased compared to when TVP was present alone.

**[Table 3]**

| TVP | | 100wt% | 80wt% | 60wt% |
|---|---|---|---|---|
| Bean-curd dregs | | 0wt% | 20wt% | 40wt% |
| Protein content (Based on solid content) | | 60% | | |
| Meat-like texture | After fermentation | 5.2 | 4.8 | 4.3 |
| | After vacuum compression | 7.8 | 7.5 | 7.4 |
| | After vacuum compression and heating | 9.0 | 8.5 | 8.2 |

In the above, representative Examples of the present application have been described by way of example, but the scope of the present application is not limited to the specific Examples described above. Anyone skilled in the art will be able to make appropriate changes within the scope of the claims of the present application.

## Claims

1. A method of preparing a fermented texturized vegetable protein, comprising:
(a) inoculating and culturing fungi on a substrate containing the texturized vegetable protein (TVP); and
(b) compressing the substrate culture.

2. The method of preparing a fermented texturized vegetable protein according to claim 1, wherein the texturized vegetable protein(TVP) contains proteins derived from wheat, soybeans, peas, sesame seeds, cotton seeds, or rice.

3. The method of preparing a fermented texturized vegetable protein according to claim 1, wherein the substrate of step (a) further contains one or more ingredients selected from the group consisting of bean-curd dregs, soy powder, wheat flour, dietary fiber, protein, amino acids, hydration water, fat, oil, vitamins, and minerals.

4. The method of preparing a fermented texturized vegetable protein according to claim 3, wherein the substrate of step (a) further contains bean-curd dregs.

5. The method of preparing a fermented texturized vegetable protein according to claim 4, wherein the bean-curd dregs are contained in an amount greater than 0 wt% and 60wt% or less compared to the total weight of the substrate.

6. The method of preparing a fermented texturized vegetable protein according to claim 1, wherein the substrate of step (a) has the protein content of 50% to 70% based on solid content.

7. The method of preparing a fermented texturized vegetable protein according to claim 1, wherein the substrate of step (a) has an acidity of 0.1% to 0.4%.

8. The method of preparing a fermented texturized vegetable protein according to claim 1, wherein the fungi of step (a) are one or more fungi selected from the group consisting of *Rhizopus* genus, *Mucor* genus, *Neurospora* genus, *Amylomyces* genus, *Aspergillus* genus and *Monascus* genus.

9. The method of preparing a fermented texturized vegetable protein according to claim 8, wherein the fungi of Rhizopus genus is fungi of *Rhizopus oligosporus.*

10. The method of preparing a fermented texturized vegetable protein according to claim 1, wherein the fungi to be inoculated in step (a) are fungi cultured by inoculating into bean-curd dregs.

11. The method of preparing a fermented texturized vegetable protein according to claim 1, wherein the compression in step (b) is vacuum compression or mold compression.

12. The method of preparing a fermented texturized vegetable protein according to claim 1, wherein the substrate or the substrate culture does not contain a binder.

13. The method of preparing a fermented texturized vegetable protein according to claim 12, wherein the binder is a water-soluble protein derived from eggs, milk, or beans; potato starch, tapioca starch, sweet potato starch, arrowroot starch, wheat starch, corn starch, or rice starch; carboxymethylcellulose (CMC); Carrageenan, guar gum, or xanthan gum.

14. The method of preparing a fermented texturized vegetable protein according to claim 1, further comprising heating the compressed substrate culture after step (b).

15. The method of preparing a fermented texturized vegetable protein according to claim 14, wherein the heating is performed at a temperature of 75°C to 100°C.
